(19) Europäisches Patentamt
European Patent Office
Office européen des brevets

(11) **EP 3 858 802 A1**

(12) **EUROPEAN PATENT APPLICATION**
published in accordance with Art. 153(4) EPC

(43) Date of publication:
**04.08.2021 Bulletin 2021/31**

(21) Application number: **19865314.9**

(22) Date of filing: **13.06.2019**

(51) Int Cl.:
*C04B 35/565* (2006.01)      *C04B 35/577* (2006.01)
*C04B 35/628* (2006.01)      *C04B 35/80* (2006.01)

(86) International application number:
**PCT/JP2019/023511**

(87) International publication number:
**WO 2020/066152 (02.04.2020 Gazette 2020/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.09.2018 JP 2018183284**

(71) Applicants:
• **Fujimi Incorporated**
  **Kiyosu-shi, Aichi 452-8502 (JP)**
• **Kyoto University**
  **Kyoto-shi, Kyoto 606-8501 (JP)**

(72) Inventors:
• **TAGUCHI, Souma**
  **Kiyosu-shi, Aichi 452-8502 (JP)**

• **KAMOSHIDA, Keigo**
  **Kiyosu-shi, Aichi 452-8502 (JP)**
• **KATO, Akihiro**
  **Kiyosu-shi, Aichi 452-8502 (JP)**
• **ASHITAKA,Keiji**
  **Kiyosu-shi, Aichi 452-8502 (JP)**
• **MIWA,Naoya**
  **Kiyosu-shi, Aichi 452-8502 (JP)**
• **HINOKI, Tatsuya**
  **Kyoto-shi, Kyoto 606-8501 (JP)**
• **SHIMODA, Kazuya**
  **Kyoto-shi, Kyoto 606-8501 (JP)**

(74) Representative: **Fujimoto, Naho**
**Maiwald Patentanwalts- und Rechtsanwaltsgesellschaft mbH**
**Elisenhof**
**Elisenstraße 3**
**80335 München (DE)**

(54) **COATED SILICON CARBIDE PARTICLE POWDER**

(57) The present invention provides a means that can improve density and mechanical strength in a sintered body of a composition containing a sintering aid and a silicon carbide particle, and a molded article containing the sintered body. The present invention relates to a coated silicon carbide particle powder containing a silicon carbide particle, and a coating layer coating the silicon carbide particle, in which the coating layer contains an aluminum element, and the mass of the aluminum element per unit surface area of the silicon carbide particle is 0.5 mg/m$^2$ or more.

EP 3 858 802 A1

**Description**

**TECHNICAL FIELD**

The present invention relates to a coated silicon carbide particle powder, a dispersion, a green sheet, and a prepreg material containing the powder, a sintered body of the coated silicon carbide particle powder, and a molded article containing the sintered body.

**BACKGROUND ART**

Silicon carbide (SiC) is highly rigid and excellent in high-temperature heat resistance, mechanical strength, impact resistance, wear resistance, oxidation resistance, and corrosion resistance, and the thermal expansion coefficient thereof is small. Therefore, application of silicon carbide in various uses such as polishing compositions and high-temperature structural members has been expected.

In application of silicon carbide, it has been considered that, in the formation of a desired composition or material, particulate silicon carbide (silicon carbide particles, and SiC particles) is used by being dispersed in a dispersing medium or a medium of a polymer material, or by being mixed with other materials such as ceramic particles. Also, for improving a function of a dispersion or mixture containing silicon carbide particles, a molded article formed therefrom, and the like, studies have been made to coordinate a compound that can impart a desired function to the periphery of silicon carbide particles and perform dispersion and mixing.

In JP 2012-106888 A, there is disclosed that the insulating property of silicon carbide particles can be improved by coating a surface of silicon carbide particles with an oxide coating film of alumina and the like, whose thickness is 10 nm to 500 nm and which is provided by sintering. There is also disclosed that the heat resistance, high thermal conductivity, and high insulating property of a composite composition can be achieved by inclusion of such coated silicon carbide particles.

**SUMMARY OF INVENTION**

However, in the technique related to JP 2012-106888 A, there has been a problem that sufficient mechanical strength cannot be obtained in some cases in a sintered body resulting from sintering of coated silicon carbide and further, in a molded article containing such a sintered body.

The present invention is thus conceived in view of the above problems, and an object of the present invention is to provide a means that can improve density and mechanical strength in a sintered body of a composition containing a sintering aid and silicon carbide particles, and a molded article containing the sintered body.

To solve the above problems, the inventors of the present invention conducted diligent research. As a result, the inventors of the present invention found that the above problems can be solved by providing a coating layer containing an aluminum element that can be a sintering aid on a surface of the silicon carbide particle in a predetermined coating amount or more, and thus completed the present invention.

In other words, the above problems of the present invention can be solved by the following means;

A coated silicon carbide particle powder containing a silicon carbide particle, and a coating layer coating the silicon carbide particle, in which the coating layer contains an aluminum element, and the mass of the aluminum element per unit surface area of the silicon carbide particle is 0.5 mg/m$^2$ or more.

**DESCRIPTION OF EMBODIMENTS**

Hereinafter, the present invention will be described. Note that, the present invention is not limited to the following embodiments.

In the present specification, "X to Y" indicating a range means "X or more and Y or less". Also, in the present specification, the operation and measurement of physical properties and the like are performed under conditions at room temperature (20 to 25°C) and a relative humidity of 40 to 50% RH unless otherwise noted.

<Coated silicon carbide particle powder>

An aspect of the present invention relates to a coated silicon carbide particle powder containing a silicon carbide particle, and a coating layer coating the silicon carbide particle and containing an aluminum element, in which the coating layer contains the aluminum element, and the mass of the aluminum element per unit surface area of the silicon carbide particle is 0.5 mg/m$^2$ or more. According to an aspect of the present invention, a means that can improve density and mechanical strength in a sintered body of a composition containing a sintering aid and a silicon carbide particle, and a molded article containing the sintered body.

The inventors of the present invention presume a mechanism to solve the above problems by the present invention as follows.

Formation of a sintered body becomes easier by introducing an aluminum element-containing compound as a sintering aid during sintering of SiC particles. However, when the amount of the sintering aid is small, the amount of the sintering aid present between respective SiC particles is insufficient, as a result of which SiC particles are sintered in a state where particles are in direct contact. Therefore, defective portions where fusion between these particles is insufficient may be generated in some cases. Such a defective portion can be a start point of breaking when a stress is applied. For this reason, in the sintered body having the defective portion, the mechanical strength is decreased. Moreover, when mixing of SiC particles and a sintering aid is insufficient, the number of occurrence of the defective portion in the sintered body and the state of fusion between SiC particles are different depending on the location, leading to ununiformity. When a stress is applied to the sintered body at that time, stress concentration occurs at specific sites due to difference in characteristics depending on the location, and these sites can be a start point of breaking. For this reason, in the sintered body in which the number of occurrence of the defective portion and the state of fusion are not uniform, the mechanical strength is decreased.

Meanwhile, in the present invention, a coated SiC particle powder contains an aluminum element as a coating layer. This makes it possible to more reliably perform introduction of a sintering aid into SiC particles. In other words, by disposing the sintering aid as a coating layer on a surface of the SiC particle, the shortage of the amount of the sintering aid present between respective SiC particles can be prevented. Also, the SiC particle and sintering aid can be allowed to be present in the entire composition to be sintered in a state of being dispersed more uniformly. Then, when the mass of the aluminum element per unit surface area of the SiC particle is 0.5 mg/m$^2$ or more, the abundance of the sintering aid present between respective SiC particles becomes sufficient. Furthermore, the dispersibility of the SiC particles and sintering aid in the entire composition to be sintered becomes sufficient. As a result, the mechanical strength of the sintered body is improved, and further, the mechanical strength of a molded article containing the sintered body is improved.

It will be understood that the technical scope of the present invention will not be influenced by whether or not the above mechanism based on the assumption is correct.

In the present specification, "coated SiC particle" represents a coated particle having a SiC particle and a coating layer coating the SiC particle. Here, the coated SiC particle is only required to be a particle in which at least a part of the SiC particle is coated with the coating layer. Also, in the present specification, "coated SiC particle powder" represents a collection of particles containing a plurality of coated SiC particles. The coated SiC particle powder may contain components other than the coated SiC particles in some cases. In this case, other components are preferably only inevitable impurities in a coating treatment. In the present specification, the inevitable impurities in a coating treatment represent, for example, components that can be contained in association with formation of the coated SiC particle, such as raw material particles or unreacted raw materials of coating components, byproducts, reagents used for reaction that can be added as necessary, and impurities derived from raw materials. Note that, it is assumed that the inevitable impurities in the coating treatment do not include components that can be optionally added in the production process and after production for the purpose of expressing a function.

Note that it may be difficult for the coated SiC particle powder to quantitively analyze the proportion of the coated SiC particles in the coated SiC particle powder with accuracy or remove other components that are contained in the coated SiC particle powder, depending on the type of the other components. In particular, in a case where other components are inevitable impurities in the coating treatment, due to reasons such as analytical characteristics being similar, difficulty in accurately analyzing the quantitative determination of the proportion of the coated SiC particles in the coated SiC particle powder or removing the other components may become high depending on the type of the inevitable impurities. However, even in this case, when inclusion of the coated SiC particles in the coated SiC particle powder is confirmed by the analytical method described later, such a coated SiC particle powder has a favorable dispersibility in a dispersing medium, and has desired characteristics derived from the characteristics of the raw material particle and coating component.

The proportion of the coated SiC particles in the coated SiC particle powder is most preferably 100 mass% relative to the total mass of the coated SiC particle powder. Note that, in consideration of production efficiency and the like, the proportion of the coated SiC particles in the coated SiC particle powder is preferably 50 mass% or more, more preferably 70 mass% or more, even more preferably 90 mass% or more, still even more preferably 99 mass% or more, and particularly preferably 99.9 mass% or more (upper limit: 100 mass%).

In the present specification, the term "powder" is used for ease of convenience. However, the term represents not only a substance in the form of powder (dried state), but also represents a substance that is present in a state of being dispersed in a dispersing medium and that can be obtained in the form of powder when the dispersing medium is volatilized. Preferably, the coated SiC particle powder can maintain the form of a coated SiC particle even in a case of being washed with a solvent such as water, or even in a state of being dispersed in a dispersing medium such as water.

(Mass of aluminum element per unit surface area of silicon carbide particle of coated silicon carbide particle powder)

The mass of the aluminum (Al) element per unit surface area of the SiC particle of the coated SiC particle powder (hereinafter, also referred to as "mass of Al element per unit surface area of SiC") is 0.5 mg/m$^2$ or more. When the mass of the Al element per unit surface area of SiC is less than 0.5 mg/m$^2$, in a sintered body containing a coated SiC particle powder and a molded article containing the sintered body, sintering does not sufficiently proceed and the structure of the sintered body becomes non-uniform, resulting in insufficient density and mechanical strength. From the same viewpoint, the mass of the Al element per unit surface area of SiC is preferably 1 mg/m$^2$ or more. Further considering the viewpoint of improving the uniformity of the color tone of the resulting sintered body and the molded article containing the sintered body, the mass of the Al element per unit surface area of SiC is more preferably 1.2 mg/m$^2$ or more, and even more preferably 1.35 mg/m$^2$ or more. Note that the color tone is associated with the uniformity of the sintered body, and it is conceived that when the uniformity of the color tone is improved, the uniformity of the sintered body is also improved. Furthermore, the upper limit of the mass of the Al element per unit surface area of SiC is, although not particularly limited, preferably 30 mg/m$^2$ or less, more preferably 20 mg/m$^2$ or less, and even more preferably 10 mg/m$^2$ or less. With the above range, a function derived from the SiC particle in the sintered body and the molded article containing the sintered body is further improved. The mass of the Al element per unit surface area of SiC can be measured as follows. First, the specific surface area of the SiC particle is measured by using a specific surface area meter FlowSorb II manufactured by Micromeritics Instrument Corporation. Next, the weight ratio $\alpha(\alpha = Al/Si)$ of the Al element to the Si element of a bulk body composed of 100 parts by mass of a coated SiC particle powder (dried powder) and 10 parts by mass of lithium tetraborate is measured by using an X-ray fluorescence spectrometer XRF-1700 manufactured by Shimadzu Corporation. Next, the mass of the Al element per unit surface area of SiC is calculated by using $\alpha$, the specific surface area of the SiC particle, the Si atomic weight, and the SiC molecular weight. Note that details of the measurement method and calculation method will be described in the Examples.

(Average secondary particle size of coated SiC particle powder)

The upper limit of the average secondary particle size of the coated SiC particle powder is, although not particularly limited, preferably 10 μm or less, more preferably 5 μm or less, even more preferably 2 μm or less, particularly preferably 1 μm or less, and most preferably 0.5 μm or less. With the above range, dispersibility is further improved when the coated SiC particle powder is dispersed in a medium. Furthermore, the uniformity of the coated SiC particle powder, and a composition or composite containing the coated SiC particle powder, such as a green sheet and a prepreg material is further improved. As a result, the density and mechanical strength of the sintered body of the coated SiC particle powder and the molded article containing the sintered body is further improved. The reason for this is presumed that when the average secondary particle size is small, variation of the particle size of individual coated SiC particle is also small. In addition, the lower limit of the average secondary particle size of the coated SiC particle powder is, although not particularly limited, preferably 0.03 μm or more, more preferably more than 0.03 μm, even more preferably 0.05 μm or more, still even more preferably more than 0.05 μm, particularly preferably 0.1 μm or more, and most preferably more than 0.1 μm. With the above range, in a case of using another particle described later in combination in a dispersion, aggregation in the dispersing medium is even less likely to occur, so that dispersibility is further improved. Also, in a case of using another particle described later in combination in a powder material containing the coated SiC particle powder, and a composition or composite containing the coated SiC particle powder, such as a green sheet and a prepreg material, uniformity is further improved. Thereby, the density and mechanical strength of the sintered body of the coated SiC particle powder and the molded article containing the sintered body are further improved. The reason for this is presumed that, when the particle size increases, the number of the coated SiC particles in the same mass deceases, and therefore the frequency of particle aggregation occurred between the coated SiC particle and another particle can be further reduced. Here, the value of the average secondary particle size of the coated SiC particle powder can be measured in a dispersion in which a coated SiC particle powder is dispersed in a dispersing medium at an appropriate concentration for measurement, by using a scattering type particle size distribution measuring apparatus LA-950 manufactured by Horiba, Ltd.

(Isoelectric point)

The lower limit of the pH of the isoelectric point of the coated SiC particle powder is, although not particularly limited, preferably 4.5 or more, more preferably 5 or more, even more preferably 5.5 or more, still even more preferably 6 or more, particularly preferably 6.5 or more, and most preferably 7.5 or more. Also, the upper limit of the pH of the isoelectric point of the coated SiC particle powder is, although not particularly limited, preferably 9 or less, and more preferably 8.5 or less.

With the above range, in a case of using another particle described later in combination in a dispersion, aggregation in the dispersing medium is even less likely to occur, so that dispersibility is further improved. Also, in a case of using another particle described later in combination in a powder material containing the coated SiC particle powder, and a composition or composite containing the coated SiC particle powder, such as a green sheet and a prepreg material, uniformity is further improved. Thereby, the density and mechanical strength of the sintered body of the coated SiC particle powder and the molded article containing the sintered body are further improved. For the pH of the isoelectric point, a solution for zeta potential measurement is prepared at 1.0 pH intervals, for example, at 1.0 pH intervals in a range of 3.0 to 10.0, and the zeta potential is measured. The pH of the isoelectric point can be calculated from the pH values before and after the sign of the zeta potential has been changed, and the zeta potentials at the pH values before and after the sign of the zeta potential has been changed by the following equation.

[Equation 1]

$$\text{pH of isoelectric point} = \frac{\alpha \times \zeta_\beta - \beta \times \zeta_\alpha}{\zeta_\beta - \zeta_\alpha}$$

$\alpha$ and $\beta$: pH values before and after sign of zeta potential has been changed ($\alpha < \beta$)
$\zeta_\alpha$: zeta potential at pH value $\alpha$
$\zeta_\beta$: zeta potential at pH value $\beta$

Here, the pH can be measured by using a pH meter (model: F-71) manufactured by Horiba, Ltd. Also, the zeta potential can be measured by using a zeta potential measurement apparatus (trade name "Zetasizernano ZSP") manufactured by Malvern Instruments.

(Silicon carbide particle)

Silicon carbide (SiC) particles are highly rigid and excellent in high-temperature heat resistance, mechanical strength, impact resistance, wear resistance, oxidation resistance, and corrosion resistance, and the thermal expansion coefficient thereof is small. Therefore, silicon carbide particles can be used in various uses such as polishing compositions and high-temperature structural members.

Furthermore, the upper limit of the average primary particle size of the SiC particle is, although not particularly limited, preferably less than 10 $\mu$m, more preferably less than 5 $\mu$m, even more preferably less than 2 $\mu$m, particularly preferably less than 1 $\mu$m, and most preferably less than 0.5 $\mu$m. With the above range, dispersibility is further improved when the coated SiC particle powder is dispersed in a medium. Furthermore, the uniformity of the coated SiC particle powder, and a composition or composite containing the coated SiC particle powder, such as a green sheet and a prepreg material is further improved. As a result, the density and mechanical strength of the sintered body of the coated SiC particle powder and the molded article containing the sintered body is further improved. The lower limit of the average primary particle size of the SiC particle is, although not particularly limited, preferably 0.03 $\mu$m or more, more preferably 0.05 $\mu$m or more, and even more preferably 0.1 $\mu$m or more. With the above range, the function of the coated SiC particle to be formed can be further improved. The average primary particle size of the SiC particle can be determined by taking an image by using SEM SU8000 manufactured by Hitachi High-Tech Corporation, and then calculating the average primary particle size as the volume average particle size of 100 particles by using image analysis type particle size distribution software MacView manufactured by Mountech Co., Ltd.

The upper limit of the average secondary particle size of the SiC particle is, although not particularly limited, preferably less than 10 $\mu$m, more preferably less than 5 $\mu$m, even more preferably less than 2 $\mu$m, particularly preferably less than 1 $\mu$m, and most preferably less than 0.5 $\mu$m. With the above range, dispersibility is further improved when the coated SiC particle powder is dispersed in a medium. Furthermore, the uniformity of the coated SiC particle powder, and a composition or composite containing the coated SiC particle powder, such as a green sheet and a prepreg material is further improved. As a result, the density and mechanical strength of the sintered body of the coated SiC particle powder and the molded article containing the sintered body is further improved. Also, the lower limit of the average secondary particle size of the SiC particle is, although not particularly limited, preferably 0.03 $\mu$m or more, more preferably 0.05 $\mu$m or more, and even more preferably 0.1 $\mu$m or more. With the above range, in a case of using another particle described later in combination in a dispersion, aggregation in the dispersing medium is even less likely to occur, so that dispersibility is further improved. Also, in a case of using another particle described later in combination in a powder material containing the coated SiC particle powder, and a composition or composite containing the coated SiC particle powder, such as a green sheet and a prepreg material, uniformity is further improved. Thereby, the density and mechanical strength of the sintered body of the coated SiC particle powder and the molded article containing the sintered body are further improved. With the above range, coating of the SiC particle can be more efficiently performed. The value of the average secondary particle size of the SiC particle can be measured by using a scattering type particle size distribution measuring apparatus LA-950 manufactured by Horiba, Ltd.

For the SiC particle, commercially available products may be used, or synthesized products may be used. The commercially available product is not particularly limited, and for example, products such as GC#40000 and GC8000S manufactured by Fujimi Incorporated can be used.

The SiC particle may be used singly or two or more types thereof may be used in combination.

(Coating layer)

The coating layer of the coated SiC particle contains an aluminum element. The coating layer can impart a function of imparting an insulating property to the SiC particle, a function as a sintering aid in the production of the molded article, and a function of improving polishing characteristics when being used in a polishing composition.

The aluminum element in the coating layer is preferably contained in the form of an aluminum compound. The aluminum compound is not particularly limited, and publicly known compounds can be appropriately employed. Among them, an aluminum oxide precursor is particularly preferable. That is, a coating layer according to a preferred embodiment of the present invention contains an aluminum oxide precursor, and the aluminum oxide precursor contains an aluminum element. The aluminum oxide precursor in the coating layer is changed to aluminum oxide during sintering of the coated SiC particle powder. Aluminum oxide functions as a favorable sintering aid. Then, the density and mechanical strength of the sintered body of the coated SiC particle powder and the molded article containing the sintered body are further improved by using a method of changing the aluminum oxide precursor in the coating layer to aluminum oxide during sintering of the coated SiC particle powder.

As described above, it is preferred that, in the coated SiC particle powder, the coating layer is changed to aluminum oxide by sintering. Therefore, the coating layer preferably substantially contains no aluminum oxide. In the present description, "substantially containing no aluminum oxide" represents that a spectrum shape specific to the EELS reference spectrum of aluminum oxide is not clearly observed in the EELS (Electron Energy Loss Spectroscopy) analysis of the coated SiC particle powder. Here, the EELS analysis can be performed by using TITAN80-300 manufactured by FEI Company.

The aluminum compound that can be used as the aluminum oxide precursor is not particularly limited. Examples thereof include aluminum hydroxide; aluminum salts such as aluminum oxyhydroxide, aluminum nitrate, aluminum chloride, aluminum acetate, aluminum sulfate, aluminum alum, aluminum formate, aluminum benzoate, aluminum linoleate, aluminum oleate, aluminum palmitate, aluminum salicylate, and aluminum gallate; aluminum alkoxides such as trimethoxyaluminum, triethoxyaluminum, triisopropoxyaluminum, and tributoxyaluminum; organic aluminum compounds such as triethyl aluminum, triisobutyl aluminum, diethylaluminum chloride, ethylaluminum sesquichloride, ethylaluminum dichloride, and tri-n-octylaluminum, and the like. These compounds may be used in the form of a hydrate. Among them, aluminum hydroxide is preferable from the viewpoint that aggregation of the coated SiC particle is less likely to occur in the formation of a coating layer using the precursor thereof. That is, in the coated SiC particle powder according to an embodiment of the present invention, the coating layer preferably contains aluminum hydroxide. A coated SiC particle having a coating layer containing aluminum hydroxide (hereinafter, simply referred to as "aluminum hydroxide-coated SiC particle") has a function derived from an aluminum compound and can provide even higher dispersibility when a coated SiC particle powder is dispersed in a medium. Furthermore, higher uniformity can be obtained in the coated SiC particle powder, a composition or composite containing the coated SiC particle powder, such as a green sheet and a prepreg material, and higher density and higher mechanical strength can be obtained in a sintered body of the coated SiC particle powder and a molded article containing the sintered body.

The coating layer may also contain other components as long as the effects of the present invention are not impaired.

Inclusion of the aluminum element in the coating layer can be confirmed by subjecting the coated SiC particle to SEM (Scanning Electron Microscope)-EDX (Energy Dispersive X-ray Spectroscopy) observation and EELS (Electron Energy Loss Spectroscopy) analysis. Note that details of the measurement method will be described in the Examples.

The film thickness of the coating layer can be difficult to directly measure in some cases due to the existence state of the particle changing by coating. However, the film thickness can be determined from the mass of the aluminum element per unit surface area of the SiC particle. Furthermore, there is generally a tendency that as the film thickness of the coating layer increases, the isoelectric point of the zeta potential increases. Therefore, a preferred film thickness of the coating layer can also be determined from the coated SiC particle having a value within a preferred range of the isoelectric point.

(Production method of coated SiC particle powder)

In a case where the aluminum element in the coating layer is contained in the form of an aluminum compound, the production method of the coated SiC particle powder is preferably a method of allowing coating to proceed in a state of being a dispersion containing a SiC particle, an aluminum compound to be contained in a coating layer or a precursor thereof, and a dispersing medium.

Here, coating is preferably performed by controlling the pH (pH in the coating stage) of the dispersion containing a SiC particle, an aluminum compound to be contained in a coating layer or a precursor thereof, and a dispersing medium to a value within a predetermined range, and then maintaining the value for a predetermined period of time. The lower limit of the pH range in the coating stage is, although not particularly limited, preferably more than 7.0, more preferably 9.0 or more, and even more preferably 10.0 or more. With the above range, coating can be allowed to proceed while occurrence of aggregation of the SiC particle is suppressed and the dispersibility of the SiC particle is more favorably maintained. Furthermore, the upper limit of the pH range in the coating stage is, although not particularly limited, preferably 12.0 or less, more preferably 11.5 or less, and even more preferably 11.0 or less. With the above range, generation of inevitable impurities in the coating treatment is further reduced, so that the purity of the coated SiC particle powder to be produced is further increased.

Controlling of the pH in the coating stage can be performed by a publicly known pH adjusting agent. As such a pH adjusting agent, acid or alkali is preferable. The acid is not particularly limited, and examples thereof include inorganic acids such as nitric acid, sulfuric acid, phosphoric acid, and hydrochloric acid (particularly, inorganic strong acids such as nitric acid, sulfuric acid, and hydrochloric acid); organic acids such as acetic acid, citric acid, lactic acid, oxalic acid, phthalic acid; and the like. Among them, from the viewpoint of enabling achievement of the object with smaller amount of addition and easy procurement of a high purity product with low possibility of mixing of other elements, inorganic strong acids are preferable, and nitric acid, sulfuric acid, and hydrochloric acid are more preferable. These acids can be used singly or two or more types thereof can be mixed and used. The alkali is not particularly limited, and examples thereof include ammonia, potassium hydroxide, sodium hydroxide, ammonium hydrogen carbonate, ammonium carbonate, potassium hydrogen carbonate, potassium carbonate, sodium hydrogen carbonate, sodium carbonate, tetramethyl ammonium hydroxide, tetraethyl ammonium hydroxide, tetrabutyl ammonium hydroxide, methylamine, dimethylamine, trimethylamine, ethylamine, diethylamine, triethyl amine, ethylene diamine, monoethanolamine, N-($\beta$-aminoethyl)ethanolamine, hexamethylene diamine, diethylene triamine, triethylene tetramine, anhydrous piperazine, piperazine hexahydrate, 1-(2-aminoethyl)piperazine, N-methylpiperazine, guanidine, imidazole, triazole, and the like. Among them, for example, in a case where the precursor of the aluminum compound to be contained in the coating layer is sodium aluminate, sodium hydroxide is preferable from the viewpoint that generation of inevitable impurities in the coating treatment is small. These alkalis can be used singly or two or more types thereof may be mixed and used.

The coated SiC particle powder according to a preferred embodiment of the present invention is an aluminum hydroxide-coated SiC particle powder as described above, and the production method thereof is not particularly limited. The method is preferably a method including a step (A) of respectively preparing a raw material dispersion (1) which contains a SiC particle, alkali, and water and in which the pH is 9.0 or more and 12.0 or less, and a raw material solution (2) which contains sodium aluminate and water; and a step (B) of adding the raw material solution (2) and acid to the raw material dispersion (1) and maintaining the pH to a range of 9.0 or more and 12.0 or less, thus forming a coated particle having a coating layer containing aluminum hydroxide on a surface of the SiC particle. Here, the aluminum hydroxide-coated SiC particle powder produced may be produced in a state of being dispersed in a dispersing medium, or may be produced via a step of removing the dispersing medium thereafter.

(Step (A))

The production method of the aluminum hydroxide-coated SiC particle powder according to the above preferred embodiment includes a step (A) of respectively preparing a raw material dispersion (1) which contains a SiC particle, alkali, and water, and in which the pH is 9.0 or more and 12.0 or less, and a raw material solution (2) which contains sodium aluminate and water.

The preparation method of the raw material dispersion (1) is not particularly limited, and examples thereof include a method of dispersing a SiC particle in a dispersing medium containing water and adding alkali to the dispersion, and the like. The procedure and method of dispersing the SiC particle in the dispersing medium containing water and adding alkali is not particularly limited, and a publicly known procedure and method can be used. Examples thereof include a method of adding alkali to an aqueous dispersion of a SiC particle (dispersion containing water as a dispersing medium, preferably a water dispersion), and the like. At that time, the aqueous dispersion of a SiC particle may be a commercially available product or a synthesized product. Also, a procedure and method, in which respective component are dispersed or dissolved by using an organic solvent without mixing the organic solvent and water, and then the components are mixed with water, may also be employed.

In the preparation method of the raw material dispersion (1), the content of the SiC particle in the raw material dispersion (1) is not particularly limited. From the viewpoint of productivity, the content is preferably 8 mass% or more, and more preferably 10 mass% or more relative to the total mass of the raw material dispersion (1). Also, the content of the SiC particle in the raw material dispersion (1) is, although not particularly limited, preferably 50 mass% or less, more preferably 40 mass% or less, and even more preferably 30 mass% or less relative to the total mass of the raw material dispersion (1) from the viewpoint of dispersibility.

In the preparation method of the raw material dispersion (1), the alkali is not particularly limited, and for example, those given as an example of the pH adjusting agent used for controlling the pH in the coating stage can be used. The used amount of the alkali is not particularly limited, and the used amount may be adjusted such that the pH of the raw material dispersion (1) is a predetermined value of 9.0 or more and 12.0 or less.

The raw material dispersion (1) contains water as a dispersing medium. The water is a water that does not contain impurities as much as possible. For example, a water, in which the total content of transition metal ions is 100 ppb or less, is preferable. Here, the purity of the water can be increased by, for example, operations such as removal of impurity ions with an ion exchange resin, removal of foreign substances with a filter, and distillation. Specifically, as the water, for example, use of deionized water (ion exchanged water), pure water, ultrapure water, distilled water, and the like is preferable. Here, the content of the water in the raw material dispersion (1) is, although not particularly limited, preferably 50 mass% or more, more preferably 60 mass% or more, and even more preferably 70 mass% or more (the upper limit is less than 100 mass%) relative to the total mass of the raw material dispersion (1), from the viewpoint of allowing coating of the SiC particle with aluminum hydroxide to proceed more favorably. Furthermore, the dispersing medium may contain a solvent other than water, and the solvent other than water is preferably an organic solvent. Examples of the organic solvent include organic solvents that are mixed with water, such as acetone, acetonitrile, ethanol, methanol, isopropanol, glycerin, ethylene glycol, and propylene glycol. These organic solvents may be used singly or two or more types thereof may be used in combination.

The preparation method of the raw material solution (2) is not particularly limited, and examples thereof include a method of adding sodium aluminate to water, and the like. The procedure and method of dispersing sodium aluminate in water, and the procedure and method of adding alkali are not particularly limited, and a publicly known procedure and method can be used. The content of the sodium aluminate in the raw material solution (2) is, although not particularly limited, preferably 10 mass% or more and 50 mass% or less, and more preferably 20 mass% or more and 40 mass% or less relative to the total mass of the raw material solution (2) .

(Step (B))

The production method of the aluminum hydroxide-coated SiC particle powder according to the above preferred embodiment includes a step (B) of adding the raw material solution (2) and acid to the raw material dispersion (1) that has been prepared in the step (A) and maintaining the pH to a range of 9.0 or more and 12.0 or less, thus forming a coated particle having a coating layer containing aluminum hydroxide on a surface of the SiC particle. In this step (B), an aluminum hydroxide-coated SiC particle is produced.

The method of adding the raw material solution (2) and acid to the raw material dispersion (1) is not particularly limited as long as the pH can be maintained at 9.0 or more and 12.0 or less (i.e., as long as the concentration of the aluminate ion is not excessive). Examples of the method include a method of simultaneously adding the raw material solution (2) and acid, a method of alternately adding the raw material solution (2) and acid little by little, and the like.

The added amount of the raw material solution (2) varies depending on the content of the sodium aluminate in the raw material solution (2), and thus is not particularly limited. The amount such that the added amount of the sodium aluminate relative to 100 parts by mass of the SiC particle is 7 parts by mass or more is preferable, the amount such that the added amount of the sodium aluminate relative to 100 parts by mass of the SiC particle is 20 parts by mass or more is more preferable, and the amount such that the added amount of sodium aluminate relative to 100 parts by mass of the SiC particle is 22 parts by mass or more is even more preferable. In other words, the lower limit of the preferred range of the added amount of the sodium aluminate relative to 100 parts by mass of the SiC particle is the value described above. With the above range, the SiC particle can be sufficiently coated with aluminum hydroxide ($Al(OH)_3$), so that the function derived from aluminum hydroxide is further improved. Furthermore, the added amount of the raw material solution (2) varies depending on the content of the sodium aluminate in the raw material solution (2), and thus is not particularly limited. The amount such that the content of the sodium aluminate relative to 100 parts by mass of the SiC particle is 800 parts by mass or less is preferable, the amount such that the content of the sodium aluminate relative to 100 parts by mass of the SiC particle is 400 parts by mass or less is more preferable, the amount such that the content of the sodium aluminate relative to 100 parts by mass of the SiC particle is 100 parts by mass or less is even more preferable, and the amount such that the content of the sodium aluminate relative to 100 parts by mass of the SiC particle is 50 parts by mass or less is particularly preferable. In other words, the upper limit of the preferred range of the added amount of the sodium aluminate relative to 100 parts by mass of the SiC particle is the value described above. When coating proceeds to some extent, the effect obtained by coating becomes constant. Therefore, by setting the added amount of the raw material solution (2) to equal to or less than a predetermined amount, economical efficiency and production efficiency are further improved.

The used amount of the acid is not particularly limited, and the used amount may be adjusted such that the pH of the raw material dispersion (1) is a predetermined value of 9.0 or more and 12.0 or less. Here, the acid is preferably added in the form of an aqueous solution, and the concentration of the acid in the aqueous solution is, although not particularly limited, preferably 1.0 mass% or more, more preferably 1.5 mass% or more, and even more preferably 2.0 mass% or more relative to the total mass of the aqueous solution containing the acid. With the above range, the added amount of the aqueous solution containing the acid can be further reduced, so that productivity is further improved. Also, the concentration of the acid in the aqueous solution is, although not particularly limited, preferably 30 mass% or less, more preferably 20 mass% or less, and even more preferably 10 mass% or less relative to the total mass of the aqueous solution containing the acid. With the above range, corrosiveness is further reduced, so that a load on equipment is further reduced.

Furthermore, the rate of addition (addition rate) of the raw material solution (2) and acid is not particularly limited, and the rate may be appropriately adjusted such that the pH is in a range of 9.0 or more and 12.0 or less and the maintenance of the pH after addition is easy.

The maintenance time at which the pH is in a range of 9.0 or more and 12.0 or less in the step (B) is, although not particularly limited, preferably 1 minute or more, more preferably 30 minutes or more, even more preferably 50 minutes or more, and particularly preferably 60 minutes or more. With the above range, the SiC particle can be sufficiently coated with aluminum hydroxide, so that the function derived from aluminum hydroxide is further improved. Also, with the above range, in a case of using another particle described later in combination in a dispersion, aggregation in the dispersing medium is even less likely to occur, so that dispersibility is further improved. Furthermore, in a case of using another particle described later in combination in a powder material containing a coated SiC particle powder, a composition or composite containing the coated SiC particle powder, such as a green sheet and a prepreg material, uniformity is further improved. Thereby, the density and mechanical strength of the sintered body of the coated SiC particle powder and the molded article containing the sintered body are further improved. Also, the maintenance time at which the pH is in a range of 9.0 or more and 12.0 or less in the step (B) is, although not particularly limited, preferably 200 minutes or less, more preferably 150 minutes or less, even more preferably 120 minutes or less, and particularly preferably 90 minutes or less. When coating proceeds to some extent, the effect obtained by coating becomes constant. Therefore, when the maintenance time is in this range, economical efficiency and production efficiency are further improved.

The preferred pH range in the step (B) is similar to the pH range of the coating stage described above.

By performing the step (B), an aluminum hydroxide-coated SiC particle powder is produced in the form of a dispersion containing an aluminum hydroxide-coated SiC particle powder and a dispersing medium. Thereby, in this production method, the aluminum hydroxide-coated SiC particle powder is produced in the state of being dispersed in a dispersing medium. Thus, this method is also one example of the production method of a dispersion containing an aluminum hydroxide-coated SiC particle powder and a dispersing medium. In a case where the aluminum hydroxide-coated SiC particle powder is extracted from the produced dispersion, it can be achieved by removing the dispersing medium, impurities and the like by using a publicly known procedure and method.

(Other steps)

The production method of the above aluminum hydroxide-coated SiC particle powder may include steps other than the step (A) and step (B). The step (A) and step (B) may further include stages rerated to other operations.

In the production of the above aluminum hydroxide-coated SiC particle powder, the solution or dispersion used in each step may contain other components as long as the effects of the present invention are not impaired.

<Dispersion>

Another aspect of the present invention relates to a dispersion containing the above coated SiC particle powder and a dispersing medium. The dispersion has high dispersibility, and therefore can be preferably used as a raw material of, for example, a powder material containing a coated SiC particle powder, a composition or composite containing the coated SiC particle powder, such as a green sheet and a prepreg material, wherein, the powder material, the composition or composite have high uniformity. Furthermore, such a dispersion can be preferably used as a raw material for a sintered body of the coated SiC particle powder and a molded article containing the sintered body. As a result, higher density and higher mechanical strength in the sintered body of the coated SiC particle powder and the molded article containing the sintered body can be obtained with such a dispersion. Furthermore, the dispersion can be preferably used as a polishing composition having high polishing characteristics. However, application of the dispersion is not limited thereto.

(Dispersing medium)

The dispersion according to an embodiment of the present invention contains a dispersing medium. The dispersing medium has a function of dispersing or dissolving each component. The dispersing medium may be a dispersing medium that is present immediately after the coating treatment in the production of the above coated SiC particle powder, or a dispersing medium that has been substituted by a step or operation of substituting the dispersing medium later. The dispersing medium preferably contains water, and is more preferably only water. The water is a water that does not contain impurities as much as possible. For example, a water, in which the total content of transition metal ions is 100 ppb or less, is preferable. Here, the purity of the water can be increased by, for example, operations such as removal of impurity ions with an ion exchange resin, removal of foreign substances with a filter, and distillation. Specifically, as the water, for example, use of deionized water (ion exchanged water), pure water, ultrapure water, distilled water, and the like is preferable. Furthermore, the dispersing medium may contain a solvent other than water, and the solvent other than water is preferably an organic solvent. Examples of the organic solvent include organic solvents that are mixed with water, such as acetone, acetonitrile, ethanol, methanol, isopropanol, glycerin, ethylene glycol, and propylene glycol. The dispersing medium may be a mixed solvent of water and an organic solvent. These organic solvents may be used singly or two or more types thereof may be used in combination.

(Other components)

The dispersion according to an embodiment of the present invention may contain other components as long as the effects of the present invention are not impaired. The other components are not particularly limited, and another particle or a pH adjusting agent is particularly preferable. Here, another particle does not contain inevitable impurities in the coating treatment.

As another particle, although not particularly limited, a particle in which the lower limit of the pH of the isoelectric point is 5 or more is preferable. Also, as another particle, although not particularly limited, a particle in which the upper limit of the pH of the isoelectric point is 11 or less is preferable. With the above range, even in a case of using the above coated SiC particle powder and another particle in combination in a dispersion, aggregation in a dispersing medium is even less likely to occur, so that dispersibility is further improved. Also, in a case of using another particle described later in combination in a powder material containing the coated SiC particle powder, and a composition or composite containing the coated SiC particle powder, such as a green sheet and a prepreg material, uniformity is further improved. Thereby, the density and mechanical strength of the sintered body of the coated SiC particle powder and the molded article containing the sintered body are further improved. Furthermore, the absolute value of the difference between the pH of the isoelectric point of another particle and the pH of the isoelectric point of the coated SiC particle powder is preferably smaller. The absolute value is preferably 2 or less, more preferably 1.5 or less, and even more preferably 1 or less (the lower limit is 0). The reason for this is that particles in which the pH of the isoelectric point is similar are even less likely to cause aggregation. Note that particles in which the pH of the isoelectric point is 5 or more and 11 or less are not particularly limited, and examples thereof include alumina, copper oxide, iron oxide, nickel oxide, tin oxide, cadmium oxide, zinc oxide, zirconium dioxide, and the like.

The pH adjusting agent is not particularly limited as long as a desired pH can be achieved, and a publicly known pH adjusting agent can be appropriately used. Among them, a publicly known acid, base, salt, amine, chelating agent, and the like are preferably used.

(pH)

The pH of the dispersion according to an embodiment of the present invention is not particularly limited. The pH of the dispersion is preferably a value that is within the preferred pH range of the isoelectric point of the above coated SiC particle powder from the viewpoint of achieving higher dispersibility.

(Production method of dispersion)

In the production method of the coated SiC particle powder, in a case where the coated SiC particle powder is produced in the form of a dispersion containing the coated SiC particle powder and a dispersing medium, this method may be employed as is for the production method of the dispersion according to an embodiment of the present invention. Alternatively, a desired dispersion may be produced by substituting another dispersing medium for a dispersing medium that is present immediately after the coating treatment in the production method of the coated SiC particle powder. For example, the coated SiC particle powder is extracted by removing the dispersing medium, impurities, and the like from the produced dispersion by using a publicly known procedure and method, and then the coated SiC particle may be dispersed in a dispersing medium. The procedure and method of dispersing the coated SiC particle powder in the dispersing medium is not particularly limited, and a publicly known procedure and method can be used. Note that the above other components may be added as necessary to the dispersion produced by these methods to produce a desired dispersion.

<Green sheet>

Another aspect of the present invention relates to a green sheet containing the above coated SiC particle powder and a resin. Since the above coated SiC particle powder has high dispersibility, in the green sheet containing such a powder, the coated SiC particle powder is uniformly present at high density inside thereof, and therefore separation of resin is less likely to occur and the number of voids are small. Thus, by using such a green sheet, a molded article containing a later-described sintered body of a coated SiC particle powder and having high density and high strength can be produced.

The resin has a function as a binder. A resin to be used is not particularly limited, and resins that are used for publicly known green sheets can be appropriately employed. Among them, butyral-based resins such as polyvinyl butyral, polyacrylic ester-based resins, and polymethacrylic acid ester-based resins are preferable, butyral-based resins are more preferable, and polyvinyl butyral is even more preferable.

These resins can be used singly or two or more types thereof can be mixed and used.

The lower limit of the content of the resin in the green sheet is, although not particularly limited, preferably 1 part by mass or more, more preferably 10 parts by mass or more, and even more preferably 20 parts by mass or more relative to 100 parts by mass of the coated SiC particle powder. With the above range, a sheet containing the coated SiC particle can be more favorably formed. Also, the upper limit of the content of the resin in the green sheet is, although not particularly limited, preferably 1,000 parts by mass or less, more preferably 500 parts by mass or less, and even more preferably 200 parts by mass or less relative to 100 parts by mass of the coated SiC particle powder. With the above range, the removed amount of the resin component in the sintering step is small, so that economical efficiency and production efficiency are further improved.

The green sheet according to an embodiment of the present invention preferably contains a plasticizer from the viewpoint of improving processability and flexibility. A plasticizer to be used is not particularly limited, and plasticizers that are used for publicly known green sheets can be appropriately employed. The plasticizer is preferably glycerin, polyethylene glycol, dibutyl phthalate, di-2-ethylhexyl phthalate (dioctyl phthalate), and diisononyl phthalate, and more preferably glycerin. These resins can be used singly or two or more types thereof can be mixed and used.

The lower limit of the content of the plasticizer in the green sheet is, although not particularly limited, preferably 1 part by mass or more, more preferably 5 parts by mass or more, and even more preferably 10 parts by mass or more relative to 100 parts by mass of the coated SiC particle powder. With the above range, the flexibility of the green sheet is further improved. Also, the upper limit of the content of the plasticizer in the green sheet is, although not particularly limited, preferably 300 parts by mass or less, more preferably 200 parts by mass or less, and even more preferably 100 parts by mass or less relative to 100 parts by mass of the coated SiC particle powder. With the above range, the uniformity of components in the green sheet is further improved.

The green sheet according to an embodiment of the present invention may further contain other components for forming the green sheet, such as another particle and pH adjusting agent, which have been described in the section of the dispersion.

The production method of the green sheet is not particularly limited, and a publicly known procedure and method can be appropriately employed. For example, a method of preparing a coating fluid for forming a green sheet (dispersion for forming a green sheet) containing the above coated SiC particle powder and a dispersing medium, and applying the coating fluid for forming a green sheet on a substrate to form a sheet, and the like can be used.

The application method is not particularly limited, and a publicly known procedure and method can be appropriately employed. Examples thereof include an applicator coating method, a bar coating method, a die coating method, a comma coating method, a gravure roll coating method, a blade coating method, a spray coating method, an air-knife coating method, a dip coating method, a transfer method, and the like.

The dispersing medium of the coating fluid for forming a green sheet is not particularly limited, and for example, the dispersing medium that has been described in the section of the dispersion can be exemplified.

The preparation method of the coating fluid for forming a green sheet is not particularly limited, and a publicly known procedure and method can be appropriately employed. Among them, from the viewpoint of suppressing mixing of impurities and unintended reaction and further improving the uniformity of the green sheet, it is more preferable to mix each component of the dispersion for forming a green sheet under vacuum.

The substrate is not particularly limited, and, for example, resin films such as polyolefin films (for example, polyethylene film, polypropylene film, and the like), polyester films (for example, polyethylene terephthalate (PET) film, polyethylene naphthalate film, and the like), polyvinyl chloride, and the like are preferably used.

The film thickness of the substrate is, although not particularly limited, preferably 10 to 300 $\mu$m, and more

preferably 20 to 150 $\mu$m.

The production method of the green sheet preferably includes a drying treatment of a coating film of the coating fluid for forming a green sheet. The drying temperature is, although not particularly limited, preferably 25°C or more and 200°C or less, and more preferably 25°C or more and 100°C or less. Also, the drying time is, although not particularly limited, preferably 10 minutes or more and 3 hours or less.

The coating film thickness of the coating fluid for forming a green sheet (wet film thickness) is, although not particularly limited, preferably 100 to 2,000 $\mu$m from the viewpoint of productivity and suppressing cracks.

With the green sheet according to an embodiment of the present invention, a molded article containing a later-described sintered body of the coated SiC particle powder can be produced by performing sintering. The molded article becomes a molded article having high density and high strength.

<Prepreg material>

Another aspect of the present invention relates to a prepreg material containing a fiber substrate, the above coated SiC particle powder and a resin, or the above green sheet. The prepreg material refers to a semi-cured composite material produced by impregnating a fiber substrate (fiber woven fabric) such as a glass cloth, a SiC fiber, and a carbon fiber with a dispersion containing a resin and then drying. The above coated SiC particle powder has high dispersibility. Thus, in a prepreg material containing such a coated SiC particle powder, the coated SiC particle powder is uniformly present inside thereof at high density, and therefore separation of resin is less likely to occur and the number of voids are small. Accordingly, a molded article containing a later-described sintered body of a coated SiC particle powder and having high density and high strength can be produced with such a prepreg material.

The production method of the prepreg material is not particularly limited, and a publicly known procedure and method can be appropriately employed. Examples of the production method of the prepreg material include a method of impregnating a fiber substrate with a dispersion for forming a prepreg material containing the above coated SiC particle powder, a resin, and a dispersing medium, and removing a solvent by evaporation in the drying step. At that time, impregnation may be performed by immersion, application, and the like, and such an operation may be repeated plurality of times as necessary. Note that, as the dispersion for forming a prepreg material, for example, those similar to the above dispersion for forming a green sheet can be used. Also, as the production method of the prepreg material, for example, a method of laminating a sheet-shaped green sheet with a fiber substrate can be used. Furthermore, as the production method of the prepreg material, for example, a method of combining these two methods may be used.

With the prepreg material according to an embodiment of the present invention, a molded article containing a later-described sintered body of a coated SiC particle powder can be produced by performing sintering. The molded article becomes a molded article having high density and high strength.

<Sintered body>

Another aspect of the present invention relates to a sintered body of the above coated SiC particle powder. Since the coated SiC particle powder, which is a raw material, has high dispersibility, and therefore the sintered body has high uniformity. Thus, high uniformity is also achieved in a molded article containing the sintered body of the coated SiC particle powder, such as a molded article obtained by sintering a composition, a composite, and the like, such as a green sheet and a prepreg material. Thereby, the sintered body has high density and high strength, and thus a molded article containing the sintered body has high density and high strength.

The production method of the sintered body is not particularly limited, and a publicly known procedure and method can be appropriately employed. Examples of the production method of the sintered body include a method of obtaining a dried powder of a coated SiC particle powder from a dispersion containing the above coated SiC particle powder and a dispersing medium, and sintering the dried powder with pressurization, and the like. One example of the method includes a method of subjecting the dispersion to filtration, washing, and drying to obtain a dried powder, then filling a mold with the dried powder, and sintering the dried powder while performing uniaxial pressing, thus producing a sintered body in a state of a molded article with a specific shape. At that time, the procedure and method of filtration, washing, and drying are not particularly limited, and a publicly known procedure and method can be used. Here, the filtration method and washing method are not particularly limited, and examples thereof include a method of adding pure water to a dried powder of a coated SiC particle powder after suction filtration and repeating the suction filtration again, and the like. Also, the mold for filling the dried powder during sintering is not particularly limited, and examples thereof include a mold made of carbon, which is excellent in heat resistance, and the like. Also, examples of the production method of the sintered body include a method of sintering the above green sheet or prepreg material, and the like with pressurization. One example of the method includes a method of sintering the green sheet, or prepreg material while performing uniaxial pressing, thus producing a sintered body in a state of a molded article with a specific shape, and the like.

The procedure and method of uniaxial pressing are not particularly limited, and a publicly known procedure and method can be used. Here, a pressing apparatus is not particularly limited, and for example, a commercially available vacuum hot-press machine and the like can be used. The lower limit of the pressure during sintering is, although not particularly limited, preferably 0.1 MPa or more, more preferably 1 MPa or more, and even more preferably 5 MPa or more. With the above range, sintering of the coated SiC particle powder can be allowed to further proceed. As a result, the density of the sintered body is further improved and the uniformity is further improved, so that the mechanical strength of the sintered body and a molded article containing the sintered body is further improved. Also, the upper limit of the pressure during sintering is, although not particularly limited, preferably 50 MPa or less, more preferably 40 MPa or less, and even more preferably 30 Pa or less. With the above range, a load on the apparatus is further reduced, so that economical efficiency is further improved.

The sintering time is preferably determined as the sintering holding time. Here, the sintering holding time represents the time period from the time at which the temperature reaches the sintering temperature that is equal to or more than a desired temperature to the time at which the temperature becomes a temperature that is equal to or less than the sintering temperature. The temperature can be measured by using, for example, a thermocouple type thermometer. The lower limit of the sintering holding time is, although not particularly limited, preferably 1 minute or more, more preferably 5 minutes or more, even more preferably 10 minutes or more, and particularly preferably 60 minutes or more. With the above range, sintering of the coated SiC particle powder can be allowed to further proceed. As a result, the density of the sintered body is further improved and the uniformity is further improved, so that the mechanical strength of the sintered body and a molded article containing the sintered body is further improved. Also, the upper limit of the sintering holding time is not particularly limited from the viewpoint of the density, uniformity, and mechanical strength because when the sintering holding time reaches a certain level or more, sintering sufficiently proceeds, and the composition and structure of the sintered body becomes constant. However, the sintering holding time is preferably 600 minutes or less, more preferably 480 minutes or less, and even more preferably 300 minutes or less from the viewpoint of economical efficiency and production efficiency. With the above range, economical efficiency and production efficiency are further improved. In a case of employing a sintering condition in which there are two or more time periods at which the temperature reaches a desired sintering temperature or more, it is preferable that each sintering holding time satisfies the above range.

The sintering temperature is preferably determined as the sintering holding temperature. Here, the sintering holding temperature represents the average temperature in the sintering holding time. The average temperature can be calculated as the average value of the values obtained by measuring the temperature at every 2 seconds interval. The temperature can be measured by using, for example, a thermocouple type thermometer. The lower limit of the sintering holding temperature is, although not particularly limited, preferably 1,000°C or more, more preferably 1,100°C or more, even more preferably 1,200°C or more, and particularly preferably 1,400°C or more. With the above range, sintering of the coated SiC particle powder can be allowed to further proceed. As a result, the density of the sintered body is further improved, and the uniformity is improved, so that the mechanical strength of the sintered body and a molded article containing the sintered body is further improved. Also, the upper limit of the sintering holding temperature is not particularly limited from the viewpoint of the density, uniformity, and mechanical strength because when the sintering holding temperature reaches a certain level or more, sintering sufficiently proceeds, and the composition and structure of the sintered body becomes constant. However, the sintering holding temperature is preferably 2,400°C or less, more preferably 2,200°C or less, and even more preferably 2,000°C or less from the viewpoint of economical efficiency and production efficiency. With the above range, economical efficiency and productivity are further improved. In a case of employing a sintering condition in which there are two or more time periods at which the temperature reaches a desired sintering temperature or more, it is preferable that each sintering holding time satisfies the above range.

The atmosphere during sintering is not particularly limited, and examples thereof include atmospheric air or inert gas atmosphere, and the like. From the viewpoint of suppressing unintended reaction and further improving the uniformity of the sintered body, an inert gas atmosphere is more preferable, a nitrogen or argon atmosphere is even more preferable, and an argon atmosphere is particularly preferable. Sintering of the coated SiC particle powder can be allowed to further proceed by sintering under an inert gas atmosphere. As a result, the density of the sintered body is further improved, and the mechanical strength of the sintered body and a molded article containing the sintered body is further improved.

The strength of the sintered body can be determined by the bending strength of a molded article composed of only a sintered body. A higher strength of the sintered body is preferable, and the strength is more preferably 250 MPa or more, even more preferably 300 MPa or more, particularly preferably 350 MPa or more, and most preferably 400 MPa or more. Also, the upper limit of the strength of the sintered body is not particularly limited because the upper limit varies depending on the size and type of the SiC particle, the composition and thickness of the coating layer, sintering conditions, and the like. The strength of the sintered body can be measured by using an electromechanical universal tester manufactured by Instron Corporation in accordance with the four-point bending test using a test piece with a length of 25 mm, a width of 2 mm, and a thickness of 1.5 mm. Note that details of the measurement method will be described in the Examples.

The uniformity of the sintered body can be determined by the density of a molded article composed of only a sintered body. The lower limit of the density of the sintered body is preferably 2.80 $g/cm^3$ or more, more preferably 2.85 $g/cm^3$ or more, and even more preferably 2.90 $g/cm^3$ or more. With the above range, the uniformity of the sintered body is improved, so that the mechanical strength of the sintered body and a molded article containing the sintered body is further improved. Also, the upper limit of the density of the sintered body is preferably 3.90 $g/cm^3$ or less, more preferably 3.60 $g/cm^3$ or less, and even more preferably 3.40 $g/cm^3$ or less. With the above range, sintering further proceeds and the bending strength is further improved. The density of the sintered body can be measured by using an analytical electronic balance HR-250AZ and a specific gravity measurement kit AD-1654, manufactured by A&D Company, Limited, based on the Archimedes density measurement method.

<Molded article>

Another aspect of the present invention relates to a molded article containing the above sintered body. Since the coated SiC particle powder, which is a raw material, has high dispersibility, the molded article has high uniformity, and has also high density and high strength.

The production method of the molded article according to an embodiment of the present invention is not particularly limited. As described above, examples thereof include a method of sintering the above coated SiC particle powder alone or sintering a composition, composite, and the like, such as the green sheet and prepreg material containing the coated SiC particle powder, and the like. Then, one preferred example of the production method of the molded article includes a method including a production stage of producing a coated SiC particle powder containing a SiC particle and a coating layer coating the SiC particle, the coating layer containing an aluminum element, by the above production method of the coated SiC particle powder; and a sintering stage of performing sintering of the coated SiC particle powder or a composition, composite, and the like containing the coated SiC particle powder, such as the above green sheet and prepreg material containing the coated SiC particle powder, in which in the production stage, the mass of the aluminum element per unit surface area of the SiC particle is 0.5 $mg/m^2$ or more. Note that in the method, a controlling means for controlling the mass of the aluminum element per unit surface area of the SiC particle to 0.5 $mg/m^2$ or more is similar to that described in the production method of the above coated SiC particle powder. For example, in a case where a molded article is produced by performing sintering with a coated SiC particle powder alone, it is preferable to produce a molded article that satisfies at least one of the bending strength of the above preferred range and the density of the above preferred range.

**Examples**

The present invention will be described in greater detail with the following Examples and Comparative Examples. However, the technical scope of the present invention is not limited only to the following Examples.

Note that unless otherwise noted, "%" and "part" respectively means "mass%" and "parts by mass".

<Example 1>

(Production of powder 1)

A 20 mass% aqueous dispersion of a SiC particle (GC#40000, average secondary particle size: 0.36 $\mu$m, manufactured by Fujimi Incorporated, powder) was prepared, and then a 1M NaOH aqueous solution was added to the SiC particle aqueous dispersion such that the pH is 10.0, thus obtaining a raw material dispersion (1). Then, a 30 mass% aqueous dispersion of sodium aluminate (raw material solution (2)) was prepared. Subsequently, the aqueous dispersion of sodium aluminate (raw material solution (2)) in an amount such that the amount of sodium aluminate is 8.9 parts by mass (in terms of solid content) relative to 100 parts by mass of the SiC particle and a 9.9 mass% nitric acid aqueous solution were added to the raw material dispersion (1) with stirring over 45 minutes in a manner that the pH is maintained at a range of 9.0 or more and 11.0 or less, thus obtaining a dispersion (3-1). Then, the obtained dispersion (3-1) was further stirred for 45 minutes. Thereafter, a 9.9 mass% nitric acid aqueous solution was added to the dispersion (3-1) after stirring while stirring over 10 minutes such that the pH is 10.5, thus obtaining a dispersion (3-2). Then, a 9.9 mass% nitric acid aqueous solution was further added to the obtained dispersion (3-2) over 5 minutes such that the pH is 3.0 to obtain a dispersion containing a powder 1, thus preparing a powder 1. Here, the maintenance time for maintaining the pH at a range of 9.0 or more and 11.0 or less from addition of the raw material solution (2) and acid to the raw material dispersion (1) was more than 100 minutes and less than 105 minutes.

<Example 2>

(Production of powder 2)

A powder 2 was prepared in the same manner as in the production of the above powder 1 except for changing the added amount of the aqueous dispersion of sodium aluminate to an amount such that the amount of sodium aluminate is 14.5 parts by mass (in terms of solid content) relative to 100 parts by mass of the SiC particle 1.

<Example 3>

(Production of powder 3)

A powder 3 was prepared in the same manner as in the production of the above powder 1 except for changing the added amount of the aqueous dispersion of sodium aluminate to an amount such that the amount of sodium aluminate is 19.0 parts by mass (in terms of solid content) relative to 100 parts by mass of the SiC particle 1.

<Example 4>

(Production of powder 4)

A powder 4 was prepared in the same manner as in the production of the above powder 1 except for changing the added amount of the aqueous dispersion of sodium aluminate to an amount such that the amount of sodium aluminate is 23.0 parts by mass (in terms of solid content) relative to 100 parts by mass of the SiC particle 1.

<Example 5>

(Production of powder 5)

A powder 5 was prepared in the same manner as in the production of the above powder 1 except for changing the added amount of the aqueous dispersion of sodium aluminate to an amount such that the amount of sodium aluminate is 42.0 parts by mass (in terms of solid content) relative to 100 parts by mass of the SiC particle 1.

<Comparative Example 1>

(Production of powder 6)

A powder 6 was prepared in the same manner as in the production of the above powder 1 except for changing the added amount of the aqueous dispersion of sodium aluminate to an amount such that the amount of sodium aluminate is 3.5 parts by mass (in terms of solid content) relative to 100 parts by mass of the SiC particle 1.

<Comparative Example 2>

(Production of powder 7)

A powder 7 was prepared in the same manner as in the production of the above powder 1 except for changing the added amount of the aqueous dispersion of sodium aluminate to an amount such that the amount of sodium aluminate is 5.9 parts by mass (in terms of solid content) relative to 100 parts by mass of the SiC particle 1.

<Production of sintered body>

After 300 g of each dispersion containing each of the above obtained powders 1 to 7 was subjected to suction filtration by using a filter paper (5A). Then, a washing step of adding 50 g of pure water to the dispersion and performing suction filtration again was performed three times, and a wet product of the powder on the filter paper was recovered, followed by drying and solidifying, thus obtaining each dried powder. Then, each of the obtained dried powders was filled in a carbon mold having a rectangular parallelepiped shape and having a size of 40 mm width × 40 mm depth × 30 mm height, and sintered while performing uniaxial pressing by a vacuum hot-press machine (manufactured by Fujidempa Kogyo Co., Ltd.), thus producing a molded article formed from each sintered body. Here, the sintering conditions were as follows: sintering holding temperature: 1,400°C or more, pressure: 5 MPa or more, sintering holding time: 60 minutes or more, and under an argon atmosphere. Temperature measurement was performed during sintering at every 2 seconds interval by using a thermocouple type thermometer attached to the apparatus.

<Evaluation>

(Measurement of average primary particle size)

An SEM (manufactured by Hitachi High-Tech Corporation, SU8000) image was taken for the raw material SiC particle used for the production of powders 1 to 7. Then, the average primary particle size was measured based on the volume average particle size of 100 particles by using image analysis type particle size distribution software (manufactured by Mountech Co., Ltd., MacView). The average primary particle size of the SiC particle was 0.30 $\mu$m.

(Measurement of specific surface area)

The specific surface area was measured for the raw material SiC particle used for production of the powders 1 to 7 by using a specific surface area measuring apparatus (manufactured by Micromeritics, FlowSorb II). The specific surface area of the SiC particle was 32.3 $m^2$/g.

(Composition and structural analysis of powder)

Approximately 2 mL of each dispersion containing each of the above obtained powders 1 to 7 was collected, and the dispersion was dropped onto a filter (nuclepore, 5 $\mu$m) (manufactured by WHATMAN). Subsequently, suction filtration was performed, and then the powder was washed with 10 mL of pure water and dried on the filter, thus obtaining each dried powder. Each dried powder was collected on a Si wafer, and SEM (Scanning Electron Microscope)-EDX (Energy Dispersive X-ray Spectroscopy) observation was performed by using a scanning electron microscope SU-8000 manufactured by Hitachi High-Tech Corporation.

Also, each dried powder was collected on a piece of carbon tape, EELS (Electron Energy Loss Spectroscopy) analysis was performed by using TITAN80-300 manufactured by FEI Company.

Here, in the SEM-EDX observation of each dried powder, C, Al, and O were selected as an element of an object to be observed. An EDX spectrum of Al was observed, and it was confirmed that the positions where EDX spectra of C, Al, and O were observed clearly correspond to the positions where particles were observed in the SEM observation image. Each powder was determined to have a structure in which the SiC particle is coated with a component containing Al and O.

Furthermore, in the EELS analysis of each dried powder, it was confirmed that the observed EELS spectrum had a spectrum shape specific to an EELS reference spectrum of aluminum hydroxide ($Al(OH)_3$) (shape that is different from spectra of Al or other compounds containing Al and O). It was therefore determined that the component containing Al and O was present in a state of $Al(OH)_3$ in the coating layer of each powder.

As described above, the powders 1 to 7 were determined to be a coated SiC particle powder containing a SiC particle and a coating layer containing an aluminum element coating the SiC particle.

(Mass of aluminum (Al) element per unit surface area of SiC particle in powder)

Each dried powder was obtained from a dispersion containing each of the powders according to the Examples and Comparative Examples by a procedure as in the production of the above sintered body. To 10 g of this dried powder, 1 g of lithium tetraborate was added, and press-molding was performed to form a bulk body. The weight ratio $\alpha(\alpha$ = Al/Si) of the Al element to the Si element was measured by an X-ray fluorescence spectrometer XRF-1700 (manufactured by Shimadzu Corporation). The mass $\gamma$(g) of the aluminum element per unit surface area of the SiC particle was calculated from the $\alpha$ and the specific surface area of the SiC raw material (SiC particle) by using the following equation. Note that in the following equation, the specific surface area of the SiC raw material represents the specific surface area of the SiC particle used as a raw material in the production of the powder.

[Chemical Formula 1]

$$\gamma = [\alpha \times (\text{Si atomic weight/SiC molecular weight})]/[\text{specific surface area of SiC raw material}] = [\alpha \times (28.09/40.10)]/[32.3\,[\text{m}^2/\text{g}]]$$

(Density of sintered body)

The density (g/cm$^3$) was measured for each of the above obtained sintered bodies by using the Archimedes density measurement method. As the measurement instrument, an analytical electronic balance HR-250AZ (manufactured by A&D Company, Limited) and a specific gravity measurement kit AD-1654 (manufactured by A&D Company, Limited) were used.

(Bending strength of sintered body)

The bending strength (MPa) was measured for each of the above obtained sintered bodies by using an electromechanical universal tester (manufactured by Instron Corporation) in accordance with the four-point bending test. The test was performed under the conditions where the shape of the test piece is 25 mm in length, 2 mm in width, and 1.5 mm in thickness; the support span is 20 mm, the loading span is 10 mm, and the crosshead speed is 0.1 mm/min.

(Uniformity of color tone of sintered body)

The color tone of each of the above obtained sintered bodies was visually checked, and evaluation was performed in accordance with the following criteria. Note that a uniform color tone is more desirable, but a case where discoloration was observed only in the peripheral part is considered to be a range that is acceptable for practical use: A: color tone was uniform overall; B: discoloration was observed in only the peripheral part.

Evaluation results of the mass of the aluminum element per unit surface area of the SiC particle in the powder (mass of Al element per unit surface area of SiC), the density, bending strength, and color tone of the sintered body are shown in Table 1 below.

[Table 1]

(Table 1) Evaluation result of powder and sintered body

| | | Powder | | Sintered body | | |
|---|---|---|---|---|---|---|
| | No. | Mass of Al element per unit surface area of SiC [mg/m$^2$] | Density [g/cm$^3$] | Bending strength [MPa] | Color tone |
| Example 1 | 1 | 0.52 | 3.24 | 516 | B |
| Example 2 | 2 | 0.64 | 3.24 | 502 | B |
| Example 3 | 3 | 1.12 | 3.18 | 463 | B |
| Example 4 | 4 | 1.36 | 3.22 | 472 | A |
| Example 5 | 5 | 2.49 | 3.26 | 426 | A |
| Comparative Example 1 | 6 | 0.21 | 2.68 | 202 | A *Note 1) |
| Comparative Example 2 | 7 | 0.35 | 2.62 | 194 | A *Note 1) |
| *Note 1) Color tone is uniform overall, but color tone is different from those of Examples 1 to 5. | | | | | | |

From the results of Table 1 above, it was confirmed that the molded articles formed from sintered bodies produced by using the coated SiC particle powders according to Examples 1 to 5, in which the mass of the aluminum element per unit surface area of the SiC particle was 0.5 mg/m$^2$ or more, exhibited high density and high bending strength, and were uniform and excellent in mechanical strength. Meanwhile, it was confirmed that for the molded articles formed from the sintered bodies produced by using the coated SiC particle powders according to Comparative Examples 1 and 2, in which the mass of the aluminum element per unit surface area of the SiC particle was less than 0.5 mg/m$^2$, the density was low, and the bending strength was poor.

Also, it was confirmed that the molded articles according to Examples 4 and 5, in which the mass of the aluminum element per unit surface area of the SiC particle was 1.35 mg/m$^2$ or more, were more excellent in the uniformity of the color tone. Meanwhile, for the molded articles according to Comparative Examples 1 and 2, the color tone was uniform, but the color tone was different from those of the molded articles according to Examples 1 to 5. The reason for this is considered that sintering is insufficient.

<Production of green sheet>

Glycerin, which is a plasticizer (manufactured by Wako Pure Chemical Industries, Ltd.), was mixed in each dispersion containing each of the above obtained powders 1 to 7, and the mixture was kneaded under vacuum for 15 minutes, thus obtaining a dispersion (Hivis Mix 2P-03 model, manufactured by PRIMIX Corporation was used). Then, a 20 mass% PVB (polyvinyl butyral, product name KW-1, manufactured by Sekisui Chemical Co., Ltd.) aqueous solution was added in the obtained dispersion, and the mixture was kneaded under vacuum for 30 minutes, thus obtaining the coating fluids for forming a green sheet (dispersions for forming a green sheet) 1 to 7. For the mixing mass ratio of the coating fluid for forming a green sheet which has been finally obtained, the mass ratio of coated SiC particle powder : resin : plasticizer was 3 : 3 : 1. Green sheets 1 to 7 were obtained by applying each of these coating fluids for forming a green sheet 1 to 7 on a PET film (thickness: 100 μm) by using a 1,000 μm gap applicator such that the wet film thickness was 1,000 μm to perform sheet formation.

<Production of prepreg material>

Prepreg materials 1 to 7 were obtained by laminating each of the above obtained green sheets 1 to 7 with a SiC fiber woven fabric.

<Sintering of green sheet and prepreg material, and evaluation of molded article>

Each of the obtained green sheets and prepreg materials was sintered while performing uniaxial pressing by a vacuum hot-press machine (manufactured by Fujidempa Kogyo Co., Ltd.) to sinter each of the coated SiC particle powders contained therein. Thus, molded articles containing sintered bodies containing respective coated SiC particle powders were produced. Here, the sintering conditions were as follows: sintering holding temperature: 1,400°C or more, pressure: 5 MPa or more, sintering holding time: 60 minutes or more, and under an argon atmosphere. Temperature measurement was performed during sintering at every 2 seconds interval by using a thermocouple type thermometer attached to the apparatus.

Note that the bending strength was measured for each of the obtained molded articles in the same manner as described above, and the order of the strength was similar to the order of the bending strength of the molded article which is the sintered body of each powder contained in the molded article.

The present application is based on the Japanese patent application No. 2018-183284 filed on September 28, 2018, and a disclosed content thereof is incorporated herein as a whole by reference.

**Claims**

1. A coated silicon carbide particle powder comprising a silicon carbide particle, and a coating layer coating the silicon carbide particle, wherein
   the coating layer contains an aluminum element; and
   a mass of the aluminum element per unit surface area of the silicon carbide particle is 0.5 mg/m$^2$ or more.

2. The coated silicon carbide particle powder according to claim 1, wherein the coating layer contains an aluminum oxide precursor; and
   the aluminum oxide precursor contains the aluminum element.

**3.** The coated silicon carbide particle powder according to claim 2, wherein the aluminum oxide precursor contains aluminum hydroxide.

**4.** A dispersion comprising the coated silicon carbide particle powder according to any one of claims 1 to 3, and a dispersing medium.

**5.** A green sheet comprising the coated silicon carbide particle powder according to any one of claims 1 to 3, and a resin.

**6.** A prepreg material comprising a fiber substrate, the coated silicon carbide particle powder according to any one of claims 1 to 3 and a resin, or the green sheet according to claim 5.

**7.** A sintered body comprising the coated silicon carbide particle powder according to any one of claims 1 to 3.

**8.** A molded article comprising the sintered body according to claim 7.

## INTERNATIONAL SEARCH REPORT

| | International application No. |
|---|---|
| | PCT/JP2019/023511 |

A. CLASSIFICATION OF SUBJECT MATTER
Int. Cl. C04B35/565(2006.01)i, C04B35/577(2006.01)i, C04B35/628(2006.01)i, C04B35/80(2006.01)i

According to International Patent Classification (IPC) or to both national classification and IPC

B. FIELDS SEARCHED

Minimum documentation searched (classification system followed by classification symbols)
Int. Cl. C04B35/565, C04B35/577, C04B35/628, C04B35/80

Documentation searched other than minimum documentation to the extent that such documents are included in the fields searched
Published examined utility model applications of Japan     1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)
JSTPlus/JST7580/JSTChina (JDreamIII)

C. DOCUMENTS CONSIDERED TO BE RELEVANT

| Category* | Citation of document, with indication, where appropriate, of the relevant passages | Relevant to claim No. |
|---|---|---|
| X<br>A | JP 57-71868 A (HITACHI CHEMICAL CO., LTD.) 04 May 1982, claim 1, page 1, lower right column, lines 11-18 (Family: none) | 1, 4, 7, 8<br>2, 3, 5, 6 |
| X<br>Y | JP 09-012373 A (ISHIKAWAJIMA-HARIMA HEAVY INDUSTRIES CO., LTD.) 14 January 1997, claim 1, paragraph [0008] (Family: none) | 1-4, 7, 8<br>5, 6 |
| Y | JP 02-267167 A (TEIJIN LTD.) 31 October 1990, page 3, upper right column, line 15 to lower left column, line 7 (Family: none) | 5, 6 |
| X<br>Y | JP 62-138362 A (NIPPON STEEL CORP.) 22 June 1987, claim 1 (Family: none) | 1-3, 7, 8<br>5, 6 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>19.07.2019 | Date of mailing of the international search report<br>30.07.2019 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2019/023511 |

C (Continuation). DOCUMENTS CONSIDERED TO BE RELEVANT

| Category* | Citation of document, with indication, where appropriate, of the relevant passages | Relevant to claim No. |
| --- | --- | --- |
| X | JP 2001-284509 A (HITACHI METALS, LTD.) 12 October 2001, claims 1, 3, paragraph [0026] (Family: none) | 1 |
| P, X | WO 2019/049784 A1 (NATIONAL INSTITUTE FOR MATERIALS SCIENCE) 14 March 2019, claims 7, 8 (Family: none) | 1-3, 7, 8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012106888 A

- JP 2018183284 A